# EUROPÄISCHE PATENTANMELDUNG

(11) **EP 1 158 301 A1**
(43) Veröffentlichungstag der Anmeldung: **28.11.2001**
(21) Anmeldenummer: 01112529.1
(22) Anmeldetag: 23.05.2001
(51) Int. Cl.: G01P 13/00, G01P 15/08, G01P 3/26, G01C 9/00

(54) **Sensor zur Erfassung einer Drehbewegung**

(30) Priorität: 26.05.2000 DE 10026144
(71) Anmelder: Conti Temic microelectronic GmbH, 90411 Nürnberg (DE)
(72) Erfinder: Peter, Marcus, 87600 Kaufbeuren (DE)
(74) Vertreter: Kolb, Georg

(57) **Zusammenfassung**

Der Sensor beinhaltet eine reibungsarm entlang einer Referenzachse gelagerte Referenzmasse. Bei einer Drehung des Sensors um die Referenzachse ergibt sich aufgrund der Masseträgheit der Referenzmasse eine Relativbewegung der Referenzmasse zu den übrigen Teilen des Sensors. Diese Relativbewegung wird ausgewertet. Die Referenzmasse ist von einer Flüssigkeit umgeben, deren dichte zumindest annähernd übereinstimmt mit dem Verhältnis aus Masse zu Volumen der Referenzmasse .

## Beschreibung

Die Erfindung betrifft einen Sensor zur Erfassung einer Drehbewegung.

Bekannte Sensoren funktionieren beispielsweise nach den sogenannten Gyro-Prinzip wie etwa in der US 3933051 beschrieben. Solche Sensoren umfassen eine rotierende Masse, welche sich aufgrund der Kreiselstabilität träge verhält. Für den Langzeiteinsatz ist dies ein Nachteil. Da durch die unvermeidliche Reibung die Rotationsgeschwindigkeit abnimmt. Es muß diese Rotationsgeschwindigkeit stets überprüft werden und gegebenenfalls muss die rotierende Masse wieder beschleunigt werden.

Ein weiterer Nachteil derartiger Sensoren ist auch deren Empfindlichkeit gegenüber Erschütterungen.

Es ist daher Aufgabe der Erfindung, einen Sensor zu schaffen, welcher ohne externen Antrieb für ein im Inneren des Sensors rotierendes Teil arbeitet und darüber hinaus unempfindlich gegenüber Erschütterungen ist.

Diese Aufgabe wurde durch einen Sensor entsprechend den Merkmalen des Hauptanspruchs gelöst. Die Unteransprüche betreffen Weiterbildungen und/oder besonders vorteilhafte Ausgestaltungen der Erfindung.

Die Überlegungen, die zur Entstehung der vorliegenden Erfindung führten gingen davon aus, dass bei einem Sensor, in welchem sich eine reibungsarm entlang einer Referenzachse gelagerte Referenzmasse befindet, diese Referenzmasse aufgrund der Massenträgheit in ihrer ursprünglichen Lage verbleibt. Bei einer Drehung des Sensors um die Referenzachse ergibt sich eine Relativbewegung zwischen der trägen Referenzmasse und dem Gehäuse. Diese Relativbewegung lässt sich nun auswerten.

Um die Ansprech-Empfindlichkeit des Sensors zu erhöhen, muss die Lagerung der Referenzmasse möglichst reibungsfrei ausgestaltet sein. Für eine möglichst reibungsfreie Lagerung der Referenzmasse in Inneren des Sensors bieten sich sogenannte Magnetlager an. Durch magnetische Kräfte wird die Referenzmasse berührungslos in Inneren des Sensors gehalten.

Jedoch können solche Magnetlager nur verhältnismäßig geringe Kräfte aufbringen. Bei einer Erschütterung des Sensors kann es daher vorkommen, dass die Referenzmasse mit anderen, feststehenden Teilen des Sensor in Berührung kommt, wodurch sich sofort hohe Reibungskräfte ergeben. Dies hat dann zur Folge, dass sich die Referenzmasse zusammen mit dem Sensor bewegt und bei einer Drehung des Sensors keine oder nur eine verringerte Relativbewegung zwischen der Referenzmasse und dem Sensorgehäuse auftritt.

Für Anwendungen, die eine weniger genaue Auflösung erfordern, können die Magnetlager auch durch Gleitlager mit extremer Spielpassung (wie beispielsweise H8/d10) oder eine Kegellagerung ersetzt werden.

Die weitergehenden Überlegungen die zur Überwindung dieses Problems nötig waren machten sich die Erkenntnis zu eigen, dass Erschütterungen des Sensors dann keine Kräfte auf das Magnetlager ausüben können, wenn der Sensor in seinem Innenraum oder zumindest in einem für sich abgeschlossenen Teilbereich, in dem sich die Referenzmasse befindet vollständig mit einer Flüssigkeit gefüllt ist, deren Dichte möglichst exakt mit dem Verhältnis aus Masse zu Volumen der in den Magnetlagern gehaltenen Referenzmasse übereinstimmt.

Der Aufbau eignet sich damit insbesondere für Sensoren mit passiver, im Normalbetrieb also in Ruhe verharrende Referenzmasse im Gegensatz zu den bisher üblichen durch eine Kreiselbewegung stabilisierten Drehbewegungssensoren.

Durch einen rotationssymmetrischen Aufbau der Referenzmasse um die Referenzachse und einem Schwerpunkt der Referenzmasse, der exakt zwischen den beiden Lagerpunkten auf der Referenzachse liegt, wird ein Kippmoment vermieden.

Vorzugweise entsprechen die Massenträgheitsmomente der Referenzmasse auch annähernd der eines homogen verteilten Körpers gleicher Abmessungen und der Dichte der Flüssigkeit. Im Idealfall wirken dann bei allen fünf anderen Bewegungsarten (translatorisch und rotatorisch) keine Kräfte auf den Rotor.

Nachfolgend ist ein mögliches Ausführungsbeispiel der Erfindung anhand mehrerer Figuren näher erläutert.

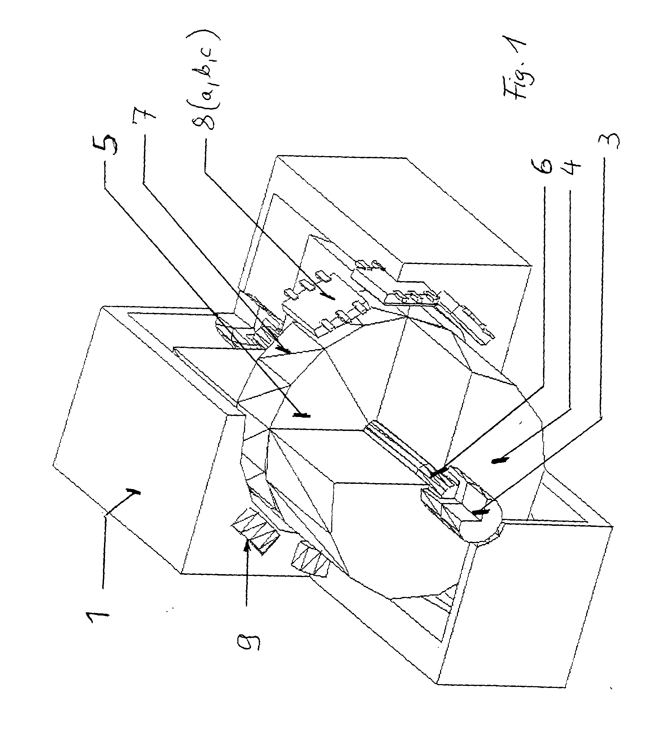

Die Figur 1 zeigt in perspektivischer teilweise geschnittener Darstellung den erfindungsgemäßen Sensor. In einem Gehäuse 1 befindet sich die Referenzmasse 2. Die Referenzmasse 2 ist über Magnetlager 3 im Gehäuse 1 gelagert. Der Innenraum des Gehäuses 1, in welchem sich die Referenzmasse 2 befindet ist mit einer hier nicht gezeichneten Flüssigkeit vollständig aufgefüllt.

Die Referenzmasse 2 besteht aus mehreren Teilen mit unterschiedlichem spezifischem Gewicht. In ihrer Gesamtheit ergibt sich für die Referenzmasse ein Verhältnis aus Gewicht zu Volumen, welches mit der Dichte und vorzugsweise auch den Massenträgheitsmomenten der Flüssigkeit möglichst genau übereinstimmt.

Die einzelnen Elemente der Referenzmasse sind die Auftriebskörper 4 und ein Anker 5, der sich zwischen den beiden Auftriebskörpern 4 befindet. Über die Welle 6 ist die gesamte Einheit aus Auftriebskörpern 4 und Anker 5 in den Magnetlagern 3 gehalten. Die Referenzmasse ist rotationssymmetrisch um die Achse der Welle 6 aufgebaut. Die Achse der Welle 6 ist identisch mit der Referenzachse. Der Schwerpunkt der Referenzmasse liegt auf der Referenzachse genau in der Mitte der Welle 6 zwischen den Magnetlagern. Dies hat zur Folge, dass bei einer Beschleunigung des Sensorgehäuses in anderer Richtung als um die Referenzachse auf die Referenzmasse keine Rotations- oder Kippmomente wirken, bzw. die Messung verfälschen.

Die Materialien für die Auftriebskörper 4, den Anker 5 und die Welle 6 sind so gewählt, dass sie insgesamt betrachtet die gleiche temperaturabhängige Volumenausdehnung aufweisen, wie die diese Teile umgebende Flüssigkeit. Hieraus ergibt sich eine Übereinstimmung der spezifischen Gewichte, bzw. der jeweiligen Verhältnisse aus Masse zu Volumen auch bei schwankenden Temperaturen.

Auch ist es möglich, durch eine Temperaturregelung die Flüssigkeit und die Referenzmasse immer auf einer optimalen Temperatur zu halten, bei welcher die spezifischen Gewichte bzw. Dichten exakt übereinstimmen.

Der Anker 5 besteht aus mehreren magnetischen Segmenten 7. In der gewählten Schnittdarstellung sind nur die Segmente 7a, 7b zu sehen. Abwechselnd zeigt der Nord- oder Südpol der magnetischen Segmente 7 zum Außenrand der Rotors 5.

Durch sogenannte magnetisch sensible "Hall"-Elemente 8a, 8b, 8c wird erkannt, ob sich gerade ein Segment 7 mit einem nach außen gerichteten Nord- oder Südpol vor dem jeweiligen Hall-Element 8 befindet. Die Elemente 8a, 8b, 8c sind hierbei zueinander versetzt angeordnet.

Die drei Hallsensoren können auch durch einen einzigen Sensor, welcher in der Lage ist, Drehrichtung und Drehrate zu detektieren, (wie z.B. HAL 710 von Micronas) ersetzt werden.

Dies bewirkt, dass der bei einer Relativbewegung des Ankers 5 bezüglich der Hallsensoren 8 auftretende Wechsel der Nord- / Südpole sowohl hinsichtlich der Drehrichtung, der Drehgeschwindigkeit und der absoluten Drehung in Grad ausgewertet werden kann.

Die hier gezeigte Auflösung mit einem Polaritätswechsel- Winkel von 45 Grad ist nur aus Gründen der Übersichtlichkeit gewählt. In der Praxis ist ein Polaritätswechsel- Winkel von bis zu 3 Grad erzielbar.

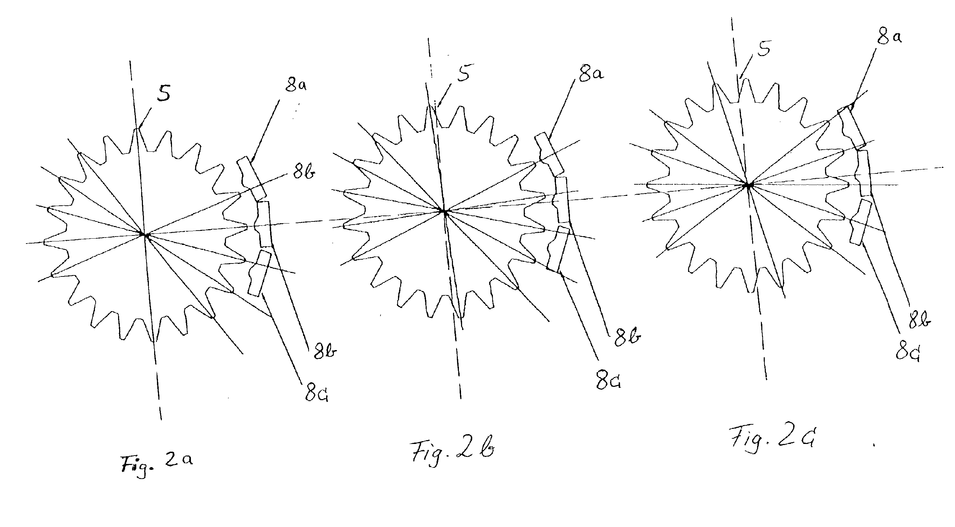

Die Figuren 2a bis 2c zeigen eine mögliche Ausgestaltung des Ankers 5 in den einzelnen Drehpositionen. Der Anker 5 besteht aus magnetischem Material, das zahnradartig ausgebildet ist. Es zeigen jeweils Süd- Pole in Richtung der Hall Sensoren 8a, 8b, 8c. Die Hall Sensoren 8 sind um mehr als einen "Zahnabstand" versetzt angeordnet und geben nur dann ein Signal ab, wenn ein Südpol direkt in ihrem Zentrum steht. Die Auswertung der von den Sensoren 8 abgegebenen Signale erlaubt in an sich bekannter Weise eine definierte Aussage über den Betrag der Drehung, die Drehgeschwindigkeit und Drehrichtung. Daraus lassen sich wiederum weitere Daten ableiten.

Die folgende Tabelle skizziert die Sensorsignale in den einzelnen Drehpositionen:

| | **Figur 2a** | **Figur 2b** | **Figur 2c** |
|---|---|---|---|
| **Sensor 8a** | 0 | 1 | 0 |
| **Sensor 8b** | 1 | 0 | 0 |
| **Sensor 8c** | 0 | 0 | 1 |

Um gegenüber der umgebenden Flüssigkeit möglichst wenig Strömungswiderstand zu bieten, sind die zwischen den Zahnradflanken vorhandenen Bereiche mit einem nichtmagnetischen Material ausgefüllt. Es ergibt sich so ein völlig glatter Außenrand des Ankers 5.

Trotz aller Bemühungen, die zwischen der Referenzmasse und den restlichen Teilen des Sensors auftretenden Wechselwirkungen so klein wie möglich zu gestalten, ergibt sich in der Praxis dennoch eine geringe Reibung. Diese wird hauptsächlich durch die Viskosität der die Referenzmasse umgebenden Flüssigkeit hervorgerufen. Der Einfluss dieser Viskosität auf das Messergebnis ist durch ein Kennfeld kompensierbar, welches die Parameter Temperatur, Drehbeschleunigung und Drehrate berücksichtigt.

Zudem ist eine frequenzseleketive Bewertung der gemessenen Drehbewegungssignale, bspw. eine Hochpaßfilterung denkbar.

Um einen Selbsttest des Sensors zu ermöglichen, sind Antriebsspulen 9 vorgesehen, durch welche die Referenzmasse in leichte Rotation versetzt werden kann. Diese Rotation kann dann von den Hall-Sensoren 8a, 8b, 8c detektiert werden und als Nachweis für die erforderliche Freigängigkeit der Referenzmasse verwendet werden.

Aus dem Verhältnis aus zugeführter Antriebsenergie und festgestellter Rotation kann zudem das Maß der Reibung ermittelt werden. Dieser Wert kann als weiterer Parameter in das Kennfeld zur Fehlerkompensation mit aufgenommen werden.

Bei einem Einsatz des Sensors in bewegten Objekten kann es zudem vorkommen, dass die Referenzmasse aufgrund der oben besprochenen Einflüsse langsam zu rotieren beginnt. Durch die Antriebsspulen 9 kann diese ungewollte Eigenrotation der Referenzmasse wieder gebremst werden.

Um diese ungewollte Eigenrotation der Referenzmasse von einer durch die Drehung des Sensor hervorgerufene Rotation unterscheiden zu können ist es vorgesehen, in einem Sensor mehrere von einander unabhängige Referenzmassen zu integrieren. Die Achsen der Referenzmassen verlaufen zueinander parallel. Da die Eigenrotation eher stochastisch und bei den einzelnen Referenzmassen unterschiedlich auftritt, eine durch die Drehung des Sensors hervorgerufene Rotation jedoch bei allen Referenzmassen gleich stark auftritt, lässt sich durch einen Vergleich der Rotation untereinander eine Eigenrotation zuverlässig erkennen.

Die für die Auswertung notwendige Elektronik kann mit im Gehäuse integriert sein, wodurch der Sensor ohne zusätzliche externe Beschaltung die entsprechenden Signale liefern kann und nach Außen hin nur als "Black-Box" auftritt.

Das hier beschriebene Beispiel stellt nur eine mögliche Ausgestaltung der Erfindung dar. Ausgehend von der Grundidee eine träge Referenzmasse möglichst reibungsfrei zu lagern, diese Referenzmasse unempfindlich gegen andere Beschleunigungen als Beschleunigungen um die Referenzachse zu gestalten und dann die Relativbewegung der trägen Referenzmasse gegenüber als Grad der Drehung des Sensors auszuwerten sind beliebig viele andere Ausführungen denkbar, die für die unterschiedlichsten Anwendungsgebiete einsetzbar sind. Nur auszugsweise sei hier der Einsatz in Navigationssystemen oder Sicherheitssystemen genannt.

## Patentansprüche

1. Sensor zur Erfassung einer Drehbewegung um eine Referenzachse, wobei
- der Sensor ein Gehäuse umfasst, innerhalb welchem eine um die Referenzachse bewegliche Referenzmasse vorhanden ist und
- eine Drehbewegung der Referenzmasse relativ zum Gehäuse als Indikator der Drehbewegung des gesamten Sensors verwendet wird,
- die Achse innerhalb des Sensors reibungsminimiert gelagert ist,
- der Schwerpunkt der Referenzmasse (4,5,6) auf der Referenzachse und mittig zwischen den Lagerpunkten (3) liegt, und
- der Innenraum des Sensors oder derjenige Teilbereich des Sensors, in welchem sich die Referenzmasse (4,5,6) befindet, vollständig mit einer Flüssigkeit aufgefüllt ist und
- die Dichte der Flüssigkeit zumindest näherungsweise übereinstimmt mit dem Verhältnis aus Masse zu Volumen der Referenzmasse (4,5,6).

2. Sensor nach Anspruch 1, **dadurch gekennzeichnet, dass** die Massenträgheitsmomente von Referenzmasse und einem homogen verteilten Körper gleicher Masse zumindest annähernd übereinstimmen.

3. Sensor nach einem der vorangegangenen Ansprüche, **dadurch gekennzeichnet, dass** die Referenzmasse (4,5,6) als Anker (5) ausgestaltet ist.

4. Sensor nach einem der vorangegangenen Ansprüche, **dadurch gekennzeichnet, dass** der temperaturabhängige Ausdehnungseffekt von Flüssigkeit einerseits und dem Gesamtvolumen der Referenzmasse (4,5,6) zumindest annähernd gleich sind.

5. Sensor nach einem der vorangegangenen Ansprüche, **dadurch gekennzeichnet, dass** an der Referenzmasse (4,5,6) Markierungen (7) vorhanden sind, die durch Detektionseinrichtungen (8a, 8b, 8c) berührungslos detektierbar sind.

6. Sensor nach einem der vorangegangenen Ansprüche, **dadurch gekennzeichnet, dass** durch eine Auswerte- und Steuereinheit eine kennlinienabhängige Fehlerkompensation durchführbar ist.

7. Sensor nach einem der vorangegangenen Ansprüche, **dadurch gekennzeichnet, dass** eine Einheit (9) vorgesehen ist, durch welche die Referenzmasse beschleunig- und/oder abbremsbar ist.

8. Sensor nach Anspruch 5 und 6, **dadurch gekennzeichnet, daß** mittels der Einheit (9) zur Beschleunigung und/oder Abbremsung durch gezielte Beschleunigung und/oder Abbremsung sowie Erfassung der jeweiligen Drehbewegung ein Reibungsparameter bestimmt und von der Auswerte- und Steuereinheit im Kennlinienfeld berücksichtigt wird.

9. Sensor nach einem der vorangegangenen Ansprüche, **dadurch gekennzeichnet, dass** im Sensor mehrere von einander unabhängige Einheiten aus Referenzmasse (4,5,6) und Detektionseinrichtungen (8a, 8b, 8c) vorhanden sind und die von den einzelnen Einheiten gelieferten Werte von einer Auswerte- und Steuereinheit auf Plausibilität überprüfbar sind.
